# EUROPÄISCHE PATENTANMELDUNG

(11) **EP 1 166 941 A2**
(43) Veröffentlichungstag der Anmeldung: **02.01.2002**
(21) Anmeldenummer: 01112563.0
(22) Anmeldetag: 23.05.2001
(51) Int. Cl.: B23K 10/00

(54) **Vorrichtung und Verfahren zum Plasma-Schweissen von Kraftfahrzeug-Karosserieteilen**

(30) Priorität: 21.06.2000 AT 10782000
(71) Anmelder: VA TECH Transport- und Montagesysteme GmbH & Co, 4031 Linz (AT)
(72) Erfinder: Kallabis, Matthias, Dr. Ing., 4020 Linz (AT)
(74) Vertreter: VA TECH Patente GmbH

(57) **Zusammenfassung**

Framing-Stationen zum Verschweißen von Kraftfahrzeugteilen sind in vielen Ausführungen bekannt. Zum Einsatz kommen häufig Punktschweißverfahren oder MIG/MAG-Schweißverfahren, mit dem Nachteil, dass diese Schweißgeräte sehr groß sind und damit schwer zugängliche Schweißnähte nicht oder nur mit großen Aufwand geschweißt werden können. In jüngster Zeit werden häufig auch Laser-Schweißverfahren eingesetzt, die allerdings im Betrieb sehr teuer sind. Erst der Einsatz einer neuen Generation von PlasmaSchweißköpfen ermöglicht den wirtschaftlichen Einsatz des Plasma-Schweißverfahrens in Framing-Stationen. Die verwendeten Plasma-Schweißköpfe sind dabei sehr kompakt, bieten hohe Schweißleistungen, eine ausgezeichnete Schweißnahtqualität und können sehr günstig betrieben werden. Außerdem können die Plasma-Schweißköpfe wegen ihrer kleinen Abmessungen auch direkt in die Spanneinrichtungen zum Spannen von Karosserieteilen in den Spannrahmen integriert werden, wodurch auch das Problem der Zugänglichkeit zur Schweißnähten nicht mehr besteht.

## Beschreibung

Die Erfindung betrifft ein Verfahren und eine Vorrichtung zum Verschweißen von Kraftfahrzeug-Karosserieteilen bei dem zumindest ein Framing-Spannrahmen, auf dem zu verschweißenden Karosserieteile montiert sind, die in der Framing-Station an der richtigen Stelle positioniert, fixiert und durch eine Schweißvorrichtung verschweißt werden sowie einer Vorrichtung zum Ausführen des Verfahrens.

Es sind einige Vorrichtungen dieser Art bekannt, wie aus der AT-A839/97, aus der europäischen Anmeldung Nr. 89830295.5 oder der WO 95/32886, die allgemein eine Framing-Station gemäß dem Oberbegriff der Erfindung offenbaren. Allerdings wird in diesen Patentschriften nicht direkt auf das Verschweißen der Karosserieteile eingegangen.

In der EP 933161, der europäischen Anmeldung Nr. 94830172.9, der WO 98/42477 oder der US 5 267 683 wird ebenfalls eine Framing-Station gemäß dem Oberbegriff der Erfindung geoffenbart und die Karosserieteile durchwegs durch Punktschweißen verschweißt, wobei die Schweißwerkzeuge allesamt auf Schweißrobotern befestigt sind.

Aus der europäischen Patentanmeldung Nr. 90830575.8 ist eine Vorrichtung bekannt, die Kraftfahrzeug-Karosserieteile in einer Schweißstation mittels einer Laser-Schweißanlage miteinander verschweißt, wobei die Laser-Schweißköpfe an den Positionsrahmen der Schweißanlage befestigt sind.

Es sind auch Druckschriften zum Plasma-Schweißen bekannt, wie die AT 135/98, wo ein besonders kompakter Plasma-Schweißkopf mit einer besonderen Düsengeometrie geoffenbart wird, oder die JP 11138270 und JP 7256463 in welchen das Schweißen von verzinkten Blechen, oder die JP 11245042, wo ein Verfahren zum Punktschweißen von Aluminiumblechen geoffenbart ist. In der WO 99/04925 wird dasPlasma-Schweißen in Zusammenhang mit der Erzeugung von Karosserien durch das Punktschweißen von sich überlappenden Blechen genannt.

Ein generell bestehendes Problem beim Fügen von Karosserieteilen eines Kraftfahrzeuges in Framing-Stationen ist, dass die Zugänglichkeit für eventuell benutzte Schweißzangen oder Stanznietzangen erschwert ist. Handelt es sich beim Schweißverfahren um das MIGMAG-Schweißen, dann kommt noch erschwerend hinzu, dass bei diesem Verfahren Spritzer entstehen, die sowohl die Bauteiloberfläche, als auch die Schweißstation selbst beeinträchtigen. Solche Schweißwerkzeuge sind in herkömmlichen Framing-Stationen auch beim Punktschweißen typischerweise an Roboterarmen montiert, was bedingt, dass die Schweißpunkte nur nacheinander gesetzt werden können. Außerdem müssen die Schweißvorrichtungen in der Lage sein die in der Karosseriefertigung typischerweise verwendeten Materialien, insbesondere Blech, verzinktes Blech und vermehrt auch Aluminium, wirtschaftlich zu bearbeiten.

Der Einsatz von Laser zum Schweißen von Karosserieteilen ist technisch zwar möglich, doch wirtschaftlich, durch hohe Betriebs- und Anschaffungskosten nur sehr bedingt umsetzbar. Zusätzlich ergeben sich aufgrund der im Betrieb auftretenden großen Verschmutzung der Laser-Schweißköpfe höhere Wartungs- und Instandhaltungskosten durch kürzere Servicezyklen, sowie durch, durch die Verwendung von Hochleistungslasern zwingend vorgeschriebenen, besondere Sicherheitseinrichtungen und zusätzlich ausgebildetes Sicherheitspersonal.

Die Erfindung hat es sich zur Aufgabe gestellt die oben angeführten verfahrenstechnischen und kostenbedingten Nachteile zu beseitigen.

Die Aufgabe wird für die Vorrichtung der eingangs genannten Art erfindungsgemäß in erster Linie dadurch gelöst, dass die Schweißvorrichtung durch mindestens einen Plasma-Schweißkopf gebildet wird. Für das Verfahren wird die Aufgabe dadurch gelöst, dass die Karosserieteile mittels des Plasma-Schweißverfahrens verschweißt werden. Zu diesem Zweck sind Plasma-Schweißköpfe verfügbar, die eine sehr kompakte Bauform aufweisen und sehr vorteilhafte Schweißeigenschaften besitzen. Darüber hinaus können solche Plasma-Schweißköpfe durch ihre besondere Ausführung sehr leicht getauscht und gewartet werden, wodurch die Stehzeiten durch Wartungsarbeiten verringert werden und es ergeben sich in Verbindung mit der Framing Technologie sehr vorteilhafte Preis/Leistungsverhältnisse im Vergleich zu anderen Schweißverfahren.

Die technischen Vorteile ergeben sich aus einer Generation von geeigneten Plasma-Schweißköpfen. Anzuführen sind hier vor allem die hohe Schweißgeschwindigkeit, keine Schweißspritzer, die kompakte, leichte Bauform der Schweißköpfe und eine verglichen mit dem Laser-Schweißen zumindest gleich hohe Energiedichte von bis zu 10⁶ W/cm² bei einem sehr kleinen Fokusdurchmesser an der Schweißstelle, wodurch erstmals in einer Framing-Station eine besonders verschmutzungsarme Bearbeitung unter besonders hohen Durchlaufzeiten möglich wird. Darüber hinaus ist es möglich alle in der Kraftfahrzeug-Karosserieerzeugung mittels Framing gängigen Materialien, und hier vor allem verzinkte Bleche und Aluminium, zu verschweißen und zwar sowohl als Punktschweißung als auch in Form von Schweißnähten in zumindest gleichbleibender Qualität wie bei herkömmlichen Verfahren.

Eine erfindungsgemäße Vorrichtung kann besonders flexibel betrieben werden, wenn zumindest ein Transportmittel vorgesehen ist, und damit die Framing-Spannrahmen zur Framing-Station transportierbar sind. Die Framing-Spannrahmen können dadurch außerhalb der Framing-Station auf ihren Einsatz vorbereitet werden und werden dann in ihre Einsatzposition in der Framing-Station gebracht, wodurch unterschiedliche Karosserieteile durch den Austausch von Framing-Spannrahmen schweißbar sind.

Eine besonders vorteilhafte Ausführungsform ergibt sich, wenn die Plasma-Schweißköpfe direkt am Framing-Spannrahmen einer Framing-Station montiert werden, oder als weitere günstige Ausführungsform direkt in die Spanneinheiten der Framing-Spannrahmen integriert werden. Dadurch wird es möglich alle Schweißpunkte gleichzeitig zu setzten und folglich die Taktzeit in der Framing-Station zu verringern, was sich in einer höheren produzierbaren Stückzahl niederschlägt. Durch die Montage der Schweißköpfe am Framing-Spannrahmen bzw. in den Spanneinheiten der Framing-Spannrahmen treten praktisch keine Probleme mehr mit der Zugänglichkeit zu den Schweißstellen auf. Ein zusätzlicher kostengünstiger Vorteil entsteht durch die Einsparung der Investitionen und Betriebskosten der Roboter.

Eine weitere vorteilhafte Ausführungsform erhält man, wenn man die Plasma-Schweißköpfe auf Lineareinheiten montiert, auf denen die Plasma-Schweißköpfe linearverfahrbar sind, da dann nicht nur Punktschweißen möglich ist, sondern auch kurze Steps, vorzugsweise im Bereich von 15 bis 30mm, linear geschweißt werden können.

Eine weitere Ausführungsform ergibt sich, wenn man als mögliche herkömmliche Alternative die Plasma-Schweißköpfe an Roboterarmen montiert. Diese Ausgestaltung erlaubt es neben Punktschweißverbindungen auch Schweißverbindungen entlang bestimmter, auch komplexer, Nähte vorteilhaft realisieren zu können.

Eine weitere günstige Ausgestaltung ergibt sich, indem die Plasma-Schweißköpfe als abnehmbare Köpfe ausgeführt werden, da es dann möglich ist, zur Wartung lediglich die Köpfe zu tauschen und nicht die gesamte Schweißvorrichtung. Dadurch reduzieren sich die durch die Wartung der Schweißanlage hervorgerufenen Stehzeiten beträchtlich.

Besonders vorteilhafte Ausführungsformen eines erfindungsgemäß verwendeten Plasma-Schweißkopfes ergeben sich, wenn die Elektrode des Plasma-Schweißkopfes an ihrem freien Ende kegelförmig ausgebildet ist und/oder wenn Plasma-Schweißköpfe mit unterschiedlichen Düsenaustrittsöffnungen, insbesondere kreisrunde, ovale oder Mehrloch-Düsenaustrittsöffnungen, einsetzbar sind und/oder zumindest die den kegelförmigen Teil der Elektrode umgebende Düsenbohrung des Plasma-Schweißkopfes zumindest teilweise ebenfalls kegelförmig ausgebildet ist. Durch eine solche Ausführungsform eines Plasma-Schweißkopfes lassen sich besonders hohe Schweißleistungen erzielen. Die Schweißleistung eines Plasma-Schweißkopfes kann noch weiter erhöht werden, wenn in der Düsenbohrung des Plasma-Schweißkopfes Kanäle vorgesehen sind, durch die eine durch kaltes Plasma-Gas durchströmte Kammer mit der Mündungsöffnung desPlasma-Schweißkopf verbunden ist, und durch die kaltes Plasma-Gas zur Kühlung des Mündungsbereiches des Plasma-Schweißkopfes und zur Abschirmung der Schweißstelle von der Umgebungsluft austretbar ist.

Eine weitere vorteilhafte Ausführungsform sieht eine zentrale Kupplungsschnittstelle vor, mit der die Plasma-Schweißköpfe mit Gas und eventuell mit Wasser zur Kühlung der Schweißköpfe versorgt werden, wodurch sich die Versorgung der Schweißköpfe wesentlich vereinfacht.

Dadurch, dass die Karosserieteile zumindest teilweise durch Punktschweißen verbunden werden oder die Karosserieteile zumindest teilweise durch das Setzen von Schweißnähten entlang bestimmter Bahngeometrien verbunden werden, ist man sehr flexibel bei der Auswahl der möglichen Schweißverbindung.

Durch die besonderen Eigenschaften des Plasma-Schweißverfahrens ist es überdies auch möglich die unterschiedlichsten Bleche, und dabei insbesondere die in der Kraftfahrzeugindustrie häufig eingesetzten verzinkten Bleche und Aluminiumbleche, zu verschweißen. Besonders vorteilhaft ist es, wenn diese verschiedenen Typen von Blechen ohne Austauschen der Schweißvorrichtung, nur durch Anpassen der entsprechenden Schweißparameter verschweißt werden können, da dann Stehzeiten durch das Wechseln von Schweißköpfen vermieden werden können.

Konstruktive Vorteile ergeben sich, wenn besonders kleine, kompakte Plasma-Schweißköpfe verwendet werden, die trotzdem eine hohe Schweißleistung aufweisen, da solche Schweißköpfe sehr leicht in Spanneinrichtungen integriert werden können. Solche Schweißköpfe sind beispielsweise sogenannte Plasmatron-Schweißköpfe der Fa. INOCON.

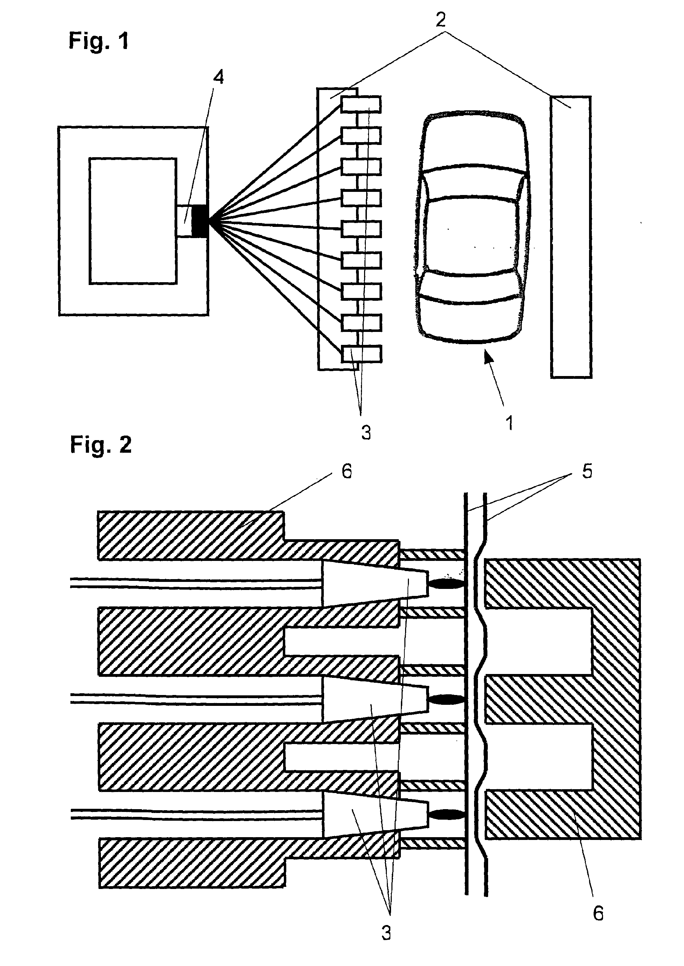

Die vorliegende Erfindung wird anhand der beispielhaften, nicht einschränkenden und schematischen Zeichnungen Fig. 1 und Fig. 2 beschrieben. Die Figuren zeigen dabei,
Fig. 1 eine schematische Darstellung einer Framing-Station,
Fig. 2 eine vergrößerte schematische Darstellung von in einer Spanneinheit angeordneten Schweißköpfen.

In Fig. 1 ist schematisch eine Framing-Station 1 dargestellt, in der sich ein Kraftfahrzeugrahmen befindet, an dem Karosserieteile 5 zu befestigen sind, insbesondere durch Verschweißen. Zu beiden Seiten der Framing-Station 1 befinden sich Spannrahmen 2, die die zu verschweißenden Karosserieteile 5 aufnehmen und positionieren. Die Spannrahmen 2 werden dabei mittels einer nicht dargestellten Transporteinheit in die Framing-Station 1 gebracht und dort an der richtigen Stelle, schweißgerecht fixiert. In einem der Spannrahmen 2 sind Plasma-Schweißköpfe 3 integriert, die über eine zentrale Versorgungskupplung 4 mit Schweißgas und eventuell auch mit Wasser versorgt werden. Die Karosserieteile 5 werden mit in den Spannrahmen 2 integrierten Plasma-Schweißköpfen 3 punktgeschweißt. Anschließend werden die Spannrahmen 2 aus der Framing-Station 1 zurückgefahren und der nächste Kraftfahrzeugrahmen in die Framing-Station 1 transportiert und wieder mit Karosserieteilen 5 verschweißt, oder es werden die Spannrahmen 2 gewechselt und andere Karosserieteile 5 verschweißt.

In Fig. 2 erkennt man Plasma-Schweißköpfe 3, die in einer schematisch dargestellten Spanneinheit 6 eines Spannrahmens 2 integriert sind. Die Spanneinheit 6 fixiert dabei die Karosserieteile 5, die anschließend mittels der Plasma-Schweißköpfe 3 miteinander verschweißt werden.

Die obige Beschreibung der Erfindung ist in keiner Weise einschränkend. Die Spanneinheiten 6 können beliebig ausgeführt sein und zwar mit oder ohne integrierten Schweißköpfen 3. Zudem ist es auch möglich die Schweißköpfe 3 auf kurzen Lineareinheiten, oder auf Schweißrobotern zu montieren, womit entweder kurze lineare Schweißnähte gesetzt werden können oder im Prinzip beliebige Bahngeometrien geschweißt werden können.
Die Spannrahmen 2 können auf jede bekannte Weise zur Framing-Station 1 gebracht und dort an der richtigen Stelle fixiert werden.

## Patentansprüche

1. Eine Vorrichtung zum Verschweißen von Kraftfahrzeug-Karosserieteilen im wesentlichen bestehend aus einer Framing-Station (1), mit zumindest einem Framing-Spannrahmen (2), auf dem zu verschweißende Karosserieteile (5) befestigbar sind, einer Spanneinheit (6), die Karosserieteile (5) in der Framing-Station (1) an der richtigen Stelle positioniert und fixiert, und einer Schweißvorrichtung zum Verschweißen der Karosserieteile **dadurch gekennzeichnet, dass** die Schweißvorrichtung durch mindestens einen Plasma-Schweißkopf (3) gebildet wird.

2. Eine Vorrichtung nach Anspruch 1 **dadurch gekennzeichnet, dass** zumindest ein Transportmittel vorgesehen ist, und damit die Framing-Spannrahmen (2) zur Framing-Station (1) transportierbar sind.

3. Eine Vorrichtung nach Anspruch 1 oder 2 **dadurch gekennzeichnet, dass** eine Anzahl von Plasma-Schweißköpfen (3) direkt am Framing-Spannrahmen (2) montiert ist.

4. Eine Vorrichtung nach Anspruch 1 oder 2 **dadurch gekennzeichnet, dass** eine Anzahl von Plasma-Schweißköpfen (3) in am Framing-Spannrahmen (2) angeordneten Spanneinheiten (6) der Karosserieteile (5) integriert ist.

5. Eine Vorrichtung nach Anspruch 3 oder 4 **dadurch gekennzeichnet, dass** eine Anzahl von Plasma-Schweißköpfen (3) auf Lineareinheiten montiert ist und dadurch innerhalb eines gewissen Bereiches, vorzugsweise zwischen 15 und 30mm, linear verfahrbar ist.

6. Eine Vorrichtung nach Anspruch 1 oder 2 **dadurch gekennzeichnet, dass** eine Anzahl von Plasma-Schweißköpfen (3) an Roboterarmen montiert ist.

7. Eine Vorrichtung nach einem der Ansprüche 3 bis 6 **dadurch gekennzeichnet, dass** eine Anzahl von Plasma-Schweißköpfen (3) als mittels Schnellverschluss-Kupplung abnehmbare Köpfe ausgeführt ist.

8. Eine Vorrichtung nach Anspruch 7 **dadurch gekennzeichnet, dass** die Elektrode des Plasma-Schweißkopfes (3) an ihrem freien Ende kegelförmig ausgebildet ist.

9. Eine Vorrichtung nach Anspruch 8 **dadurch gekennzeichnet, dass** Plasma-Schweißköpfe (3) mit unterschiedlichen Düsenaustrittsöffnungen, insbesondere kreisrunde, ovale oder Mehrloch-Düsenaustrittsöffnungen, einsetzbar sind.

10. Eine Vorrichtung nach Anspruch 9 **dadurch gekennzeichnet, dass** zumindest die den kegelförmigen Teil der Elektrode umgebende Düsenbohrung des Plasma-Schweißkopfes (3) zumindest teilweise ebenfalls kegelförmig ausgebildet ist.

11. Eine Vorrichtung nach Anspruch 10 **dadurch gekennzeichnet, dass** in der Düsenbohrung des Plasma-Schweißkopfes (3) Kanäle vorgesehen sind, durch die eine durch kaltes Plasma-Gas durchströmte Kammer mit der Mündungsöffnung des Plasma-Schweißkopf (3) verbunden ist, und durch die kaltes Plasma-Gas zur Kühlung des Mündungsbereiches des Plasma-Schweißkopfes (3) und zur Abschirmung der Schweißstelle von der Umgebungsluft austretbar ist.

12. Eine Vorrichtung nach Anspruch 11 **dadurch gekennzeichnet, dass** eine Anzahl von Plasma-Schweißköpfe (3) durch eine zentrale Kupplungs-Schnittstelle (4) mit Gas und/oder Wasser versorgt ist.

13. Ein Verfahren zum Verschweißen von Kraftfahrzeug-Karosserieteilen bei dem zumindest ein Framing-Spannrahmen (2), auf dem zu verschweißende Karosserieteile (5) montiert sind, die in der Framing-Station (1) an der richtigen Stelle positioniert, fixiert und durch eine Schweißvorrichtung verschweißt werden **dadurch gekennzeichnet, dass** die Karosserieteile (5) mittels des Plasma-Schweißverfahrens verschweißt werden.

14. Ein Verfahren nach Anspruch 13 **dadurch gekennzeichnet, dass** die Karosserieteile (5) zumindest teilweise durch Punktschweißen verbunden werden.

15. Ein Verfahren nach Anspruch 14 **dadurch gekennzeichnet, dass** die Karosserieteile (5) zumindest teilweise durch das Setzen von Schweißnähten entlang bestimmter Bahngeometrien verbunden werden.

16. Ein Verfahren nach Anspruch 14 oder 15 **dadurch gekennzeichnet, dass** Bleche, insbesondere verzinkte Blechen oder Aluminiumbleche, verschweißt werden.

17. Ein Verfahren nach Anspruch 16 **dadurch gekennzeichnet, dass** mit ein und dem selben Plasma-Schweißkopf (3) Karosserieteile (5) aus Blechen, verzinkten Blechen oder Aluminium verschweißt werden und Schweißparameter in Abhängigkeit von den geschweißten Materialien eingestellt werden.

18. Ein Verfahren nach Anspruch 17 **dadurch gekennzeichnet, dass** als Schweißköpfe (3) Plasmatron-Schweißköpfe verwendet werden.
